# EUROPÄISCHE PATENTSCHRIFT

(11) **EP 2 686 947 B1**
(45) Veröffentlichungstag und Bekanntmachung des Hinweises auf die Patenterteilung: **08.07.2020**
(21) Anmeldenummer: 12712994.8
(22) Anmeldetag: 15.03.2012
(51) Int. Cl.: H02J 3/38, H02M 7/493

(54) **NETZGEKOPPELTER WECHSELRICHTER, WECHSELRICHTERANORDNUNG UND BETRIEBSVERFAHREN FÜR EINE WECHSELRICHTERANORDNUNG**
GRID-CONNECTED INVERTER, INVERTER ARRANGEMENT AND METHOD FOR OPERATING AN INVERTER ARRANGEMENT
ONDULEUR COUPLÉ AU RÉSEAU, ENSEMBLE D'ONDULEURS ET PROCÉDÉ PERMETTANT DE FAIRE FONCTIONNER UN ENSEMBLE D'ONDULEURS

(30) Priorität: 16.03.2011 DE 102011001305
(43) Veröffentlichungstag der Anmeldung: 22.01.2014
(73) Patentinhaber: SMA Solar Technology AG, 34266 Niestetal (DE)
(72) Erfinder: EBERHARDT, Thomas, 36251 Bad Hersfeld (DE); PETSCHENKA, Josef, 34125 Kassel (DE); KRAUSE, Christopher, 33181 Bad Wünnenberg (DE); LANDAU, Christian, 34225 Baunatal (DE)
(86) Internationale Anmeldenummer: PCT/EP2012/054617
(87) Internationale Veröffentlichungsnummer: WO 2012/123559

(56) Entgegenhaltungen:
- EP-A2- 1 995 863
- WO-A1-2009/062227
- DD-A5- 293 469
- DE-A1- 19 701 191
- DE-A1- 19 701 191
- DE-A1- 19 830 655
- DE-A1-102008 056 256
- US-A1- 2008 265 680
- CHIH-CHIANG HUA ET AL: "Parallel operation of inverters for distributed photovoltaic power supply system", POWER ELECTRONICS SPECIALISTS CONFERENCE; [ANNUAL POWER ELECTRONICS SPECIALISTS CONFERENCE],, Bd. 4, 23. Juni 2002 (2002-06-23), Seiten 1979-1983, XP010596039, DOI: 10.1109/PSEC.2002.1023104 ISBN: 978-0-7803-7262-7

## Beschreibung

Die Erfindung betrifft eine Wechselrichteranordnung mit mindestens zwei netzgekoppelten Wechselrichtern zur Einspeisung von Strom über einen Transformator in ein Energieversorgungsnetz, wobei die Wechselrichter wechselstromseitig induktiv miteinander gekoppelt sind. Die Erfindung betrifft weiterhin ein Verfahren zum Betreiben einer solchen Wechselrichteranordnung.

Netzgekoppelte Wechselrichter werden in Energieversorgungsanlagen, beispielsweise Photovoltaikanlagen und Windenergieanlagen, eingesetzt. Bei netzgekoppelten Wechselrichtern folgt ein am Ausgang des Wechselrichters ausgegebener Spannungs- bzw. Stromverlauf dem entsprechenden Verlauf im Energieversorgungsnetz. In den Energieversorgungsanlagen erzeugen Generatoren, beispielsweise Photovoltaikmodule in einer Serien- und/oder Parallelschaltung, eine Gleichspannung, die - gegebenenfalls nach einer Spannungsänderung durch einen Hochsetzsteller - einem Gleichspannungszwischenkreis zugeführt wird. Gleichstrom aus dem Gleichspannungszwischenkreis wird von dem Wechselrichter in einen bezüglich seiner Frequenz und Spannung zur Einspeisung in das Energieversorgungsnetz geeigneten Wechselstrom umgewandelt. Diese Umwandlung kann dabei in ein- oder mehrphasigen, insbesondere dreiphasigen Wechselstrom erfolgen. Dabei weist der Wechselrichter eine Ausgangsbrückenschaltung auf, die, je nach Anzahl der Phasen des Energieversorgungsnetzes in das eingespeist werden soll, eine oder mehrere Schaltbrücken aufweist, die üblicherweise mit Leistungshalbleiterschaltern bestückt sind.

Die Leistungshalbleiterschalter werden dabei gemäß bestimmter Modulationsmuster so angesteuert, dass in Verbindung mit Filtern, die zwischen dem Wechselrichter und dem Energieversorgungsnetz angeordnet sind, einen möglichst sinusförmigen Ausgangsstrom erzeugt wird. Bei den häufig eingesetzten Pulsweiten-Modulationsverfahren (PWM - Puls Width Modulation) werden die Leistungshalbleiterschalter mit einer Schaltfrequenz ein- und ausgeschaltet, die deutlich höher ist als die Frequenz der Wechselspannung im Energieversorgungsnetz (beispielsweise eine Schaltfrequenz von 3 bis 30 kHz gegenüber einer Netzfrequenz von 50 oder 60 Hz). Im Verlauf einer Periode der Netzfrequenz wird dabei das Tastverhältnis genannte Verhältnis zwischen der Einschaltzeit und der Ausschaltzeit innerhalb einer Schaltfrequenzperiode derart verändert, dass sich ein möglichst sinusförmiger Verlauf des Ausgangsstroms ergibt. Bekannte Ausgestaltungen zur Bestimmung der Tastverhältnisse bzw. der Schaltzeitpunkte sind beispielsweise das "Sinus-Dreieck-Modulationsverfahren", das "Raumzeiger-Modulationsverfahren (SVM - Space Vector Modulation)" oder modifizierte Sinus-Dreieck-Modulationsverfahren, z. B. das sogenannte "Sinus-Dreieck-Modulationsverfahren mit dritter Harmonischer". Bei diesen PWM-Verfahren wird ein periodisches Hilfssignal, z.B. ein Dreiecksignal "Sinus-Dreieck-Modulationsverfahren", oder ein Taktsignal bei dem "SVM-Verfahren", zur Bestimmung der Schaltzeitpunkte eingesetzt.

Auch bei aufwändigeren Modulationsverfahren ist jedoch typischerweise die erzeugte Wechselspannung kein reines Sinussignal, sondern zeigt z.B. Frequenzkomponenten bei der Schaltfrequenz des Modulationsverfahrens, die als Spannungsrippel bezeichnet werden.

Zur Erreichung größerer Ausgangsströme oder Leistungen werden insbesondere bei größeren Photovoltaikanlagen häufig zwei oder mehr Wechselrichter parallel eingesetzt. Wenn diese Wechselrichter ausgangsspannungsseitig nicht vollständig voneinander getrennt sind, können Ausgleichsströme zwischen den Wechselrichtern auftreten, die unerwünschte zusätzliche Strombelastungen für die Leistungshalbleiterschalter der Ausgangsbrückenschaltung der Wechselrichter zur Folge haben. Solche Ausgangsströme treten beispielsweise auf, wenn Wechselrichter sowohl gleichspannungsseitig über einen gemeinsamen Zwischenkreis miteinander verbunden sind, als auch wechselspannungsseitig, beispielsweise da sie ohne Zwischenschaltung eines Transformators unmittelbar mit dem Energieversorgungsnetz verbunden sind. Gleichspannungsseitig kann eine Kopplung auch dann gegeben sein, wenn kein gemeinsamer Zwischenkreis eingesetzt wird, die Module bzw. Strings (eine Serienverschaltung von Modulen) aber jeweils mit einem Anschluss geerdet sind. Wechselspannungsseitig kann eine problematische gegenseitige Beeinflussung von zwei Wechselrichtern auch über eine induktive Kopplung gegeben sein. Bei einer induktiven Kopplung zweier Wechselrichter fließen zwar keine Gleichstrom-Ausgleichsströme, es können jedoch Ausgleichsströme mit Wechselstrom-Anteilen bei höheren Frequenzen fließen, insbesondere hervorgerufen durch die oben beschriebenen nicht ganz vermeidbaren Spannungsrippel bei der Wechselrichtung. Eine solche Kopplung kann auch bei Anlagen beobachtet werden, bei denen Transformatoren zwischen den Wechselrichtern und dem Energieversorgungsnetz angeordnet sind.

In der Druckschrift DE 10 2008 056 256 A1 wird eine Wechselrichteranordnung mit mehreren parallel geschalteten Wechselrichtern vorgestellt, bei der Ausgleichsströme zwischen den Wechselrichtern dadurch vermieden werden, dass entsprechende Leistungshalbleiterschalter der einzelnen Wechselrichter zeitgleich angesteuert werden. Dieses wird dadurch erreicht, dass einer der Wechselrichter, Master-Wechselrichter genannt, Ansteuersignale für die Leistungshalbleiter generiert, die über entsprechende Leitungen an jeden der weiteren Wechselrichter, die als Slave-Wechselrichter bezeichnet werden, übertragen werden. Dieses Verfahren ist jedoch nur bei räumlichen nah zueinander angeordneten Wechselrichtern praktikabel.

In ähnlicher Weise wird gemäß der Druckschrift EP 1 995 863 A2 eine Synchronisation der PWM-Signale der Wechselrichter von Windenergieanlagen erzielt, die über jeweils einen Transformator an ein gemeinsames Energieversorgungsnetz angeschlossen sind. Es werden hierbei jedoch nicht die Ansteuersignale unmittelbar übertragen, sondern Synchronisationssignale, mit deren Hilfe Ansteuersignale dann synchronisiert erzeugt werden. Die Synchronisationssignale werden entweder von Wechselrichter zu Wechselrichter über eigens dafür vorgesehene Synchronisationsleitungen übertragen oder werden in einer zentralen Steuereinrichtung generiert und wiederum über eigens dafür vorgesehene Synchronisationsleitungen sternförmig von der zentralen Steuereinrichtung an die Wechselrichter übermittelt. Die einzelnen Synchronisationssignale sind zueinander phasenverschoben, wodurch unerwünschte harmonische Störungen im Energieversorgungsnetz unterdrückt werden. Dabei können die Laufzeiten der Synchronisationssignale berücksichtigt werden, so dass das Verfahren auch mit Wechselrichtern durchgeführt werden kann, die räumlich nicht nah zueinander angeordnet sind. Ausgleichsströme werden nicht unterdrückt.

Die Druckschrift US 2008/0265680 A1 beschreibt eine Anordnung mehrerer Wechselrichter, die mit ihren Ausgängen unmittelbar gekoppelt sind. Die Wechselrichter werden durch PWM-Verfahren gesteuert, wobei die dabei verwendeten Hilfssignale anhand einer Netzspannung synchronisiert werden. Dadurch ist eine Übertragung von Ansteuersignalen für die Ausgangsbrückenanordnung der Wechselrichter nicht notwendig. Das Energieversorgungsnetz wird als Synchronisationsverbindung benutzt. Das Verfahren eignet sich gut für direkt zusammengeschaltete Wechselrichter. Bei induktiv, beispielsweise über Transformatoren gekoppelten Wechselrichtern, zeigt sich jedoch, dass Ausgleichsströme nicht vollständig unterbunden werden.

Das Dokument DD 293 469 A5 offenbart mehrere parallel geschaltete Stromrichter, die eingangsseitig eine Wechselstrom-Leistung aus einem Wechselstrom-Energieversorgungsnetz entnehmen und ausgangsseitig eine Wechselspannung einem Antrieb zur Verfügung stellen. Die Taktung der Eingangsbrücken erfolgt zur Unterdrückung von Oberwellen, die durch die Stromentnahme der Stromrichter im Netz entstehen, versetzt. Dabei fungiert derjenige Stromrichter mit der aktuell höchsten Leistungsaufnahme als Master, auf dessen Grundwelle der Stromrichtereingangsspannung (die von der Netzspannung verschieden ist) die Synchronisierung erfolgt. Ein Taktsignal des Master-Stromrichters wird auf die anderen Stromrichter übertragen um den Versatz zu bestimmen. Es wird also wiederum eine Übertragung von Signalen zwischen den verschiedenen Stromrichtern benötigt.

Die Druckschrift DE 198 30 655 A1 offenbart parallel geschaltete Stromrichter einer Lokomotive für ein Schienenfahrzeug, die zur Versorgung des Antriebs des Zuges mit elektrischer Energie über einen Transformator an ein Wechselstromnetz angeschlossen sind. Durch die Taktung der Eingangsbrücken der Stromrichter entstehen störende Rückwirkungen auf das Energieversorgungsnetz in Form von Oberwellen. Zur Reduktion der Oberwellen werden die Eingangsbrücken der Stromrichter versetzt getaktet, d.h. die Hilfssignale für das PWM-Verfahren sind auf die Netzspannung synchronisiert und weisen einen Versatz des Phasenwinkels auf.

Auf ähnliche Weise werden gemäß der Druckschrift DE 197 01 191 A1 bei mehreren Spannungsumsetzern, die zum Betreiben einer Gleichstrom-Last an einem Wechselspannungsnetz dienen, durch in PWM-Verfahren zeitlich versetzt getaktete Schaltorgane Oberwellen reduziert. Um die versetzte Taktung bei den verschiedenen Spannungsumsetzern zu generieren, erfolgt eine Synchronisation auf eine Quellenspannung des Energieversorgungsnetzes.

Ein Verhindern von problematischen Ausgleichsströmen zwischen Wechselrichtern, die wechselstromseitig induktiv miteinander gekoppelt sind, ist nicht Gegenstand der beiden letztgenannten Dokumente.

Es ist eine Aufgabe der vorliegenden Erfindung, eine Anordnung von Wechselrichtern und ein Verfahren zum Betreiben einer Anordnung von Wechselrichtern zu schaffen, bei denen wechselstromseitig induktiv über einen Transformator miteinander gekoppelte Wechselrichter betrieben werden können, ohne dass problematische Ausgleichsströme auftreten und ohne dass eine Übertragung von Ansteuersignalen für die Ausgangsbrückenanordnung der Wechselrichter benötigt wird.

Diese Aufgabe wird gelöst durch eine Wechselrichteranordnung und ein Verfahren zum Betreiben einer Wechselrichteranordnung mit den jeweiligen Merkmalen der unabhängigen Ansprüche. Vorteilhafte Ausgestaltungen und Weiterbildungen sind in den jeweiligen abhängigen Ansprüchen angegeben.

Gemäß einem ersten Aspekt wird die Aufgabe durch eine Wechselrichteranordnung mit mindestens zwei netzgekoppelten Wechselrichtern zur Einspeisung von Strom über einen Transformator in ein Energieversorgungsnetz gelöst, wobei die beiden Wechselrichter wechselstromseitig induktiv miteinander gekoppelt sind. Dabei weist jeder der Wechselrichter eine Ausgangsbrückenanordnung auf, die über einen Pulsweitenmodulator angesteuert wird, wobei zur Bestimmung von Schaltzeitpunkten der Ausgangsbrückenanordnung ein periodisches Hilfssignal eingesetzt wird. Die Wechselrichter weisen jeweils weiter eine Synchronisationseinheit zur Phasensynchronisation des Hilfssignals mit dem Energieversorgungsnetz auf, wobei die Synchronisationseinheit zur Einstellung eines vorgegebenen Phasenoffsets des periodischen Hilfssignals zu einer Phase des Energieversorgungsnetzes eingerichtet ist, so dass zwischen den induktiv miteinander gekoppelten Wechselrichtern keine Ausgleichsströme fließen, wobei die Synchronisationseinheit eine PLL-Schaltung umfasst.

Durch die Phasensynchronisation des Hilfssignals mit dem Energieversorgungsnetz können die Schaltzeitpunkte zweier Wechselrichter aufeinander abgestimmt sein, so dass keine Ausgleichsströme fließen, wobei der Phasenoffset es ermöglicht, dass innerhalb des Transformators auftretende Phasenverschiebungen kompensiert werden können. Dadurch kann auch bei induktiv gekoppelten Wechselrichtern eine Synchronisation ohne Übertragung von Ansteuersignalen für die Ausgangsbrückenanordnung der Wechselrichter über das Energieversorgungsnetz erfolgen.

Durch die PLL (Phase Lock Loop)- Schaltung kann auf einfache Weise eine Synchronisation des Hilfssignals mit dem Energieversorgungsnetz erfolgen, obwohl das Hilfssignal üblicherweise eine um ein Vielfaches höhere Frequenz aufweist als das Energieversorgungsnetz.

In einer vorteilhaften Ausgestaltung der Wechselrichteranordnung sind die Wechselrichter wechselstromseitig über einen Dreiwickler-Transformator induktiv miteinander gekoppelt sind. Dreiwickler-Transformatoren sind deutlich weniger aufwändig und kostengünstiger als übliche Vierwickler-Transformatoren. Die oft nachteilige geringe Impedanz zwischen den beiden Primärwicklungen bei Dreiwickler-Transformatoren ist aufgrund des Einsatzes der Wechselrichter gemäß dem ersten Aspekt unproblematisch. Dabei können die Impedanzen der Primärwicklungen auch unterschiedlich sein, da durch das angewendete Verfahren Asymmetrien kompensiert werden können.

Gemäß einem zweiten Aspekt wird die Aufgabe durch ein Betriebsverfahren für eine Wechselrichteranordnung zur Einspeisung von Leistung in ein Energieversorgungsnetz mit mindestens zwei netzgekoppelten Wechselrichtern gelöst, wobei die Wechselrichter wechselstromseitig über mindestens einen Transformator miteinander gekoppelt sind und jeweils eine Ausgangsbrückenanordnung aufweisen, die pulsweitenmoduliert unter Verwendung eines periodischen Hilfssignals angesteuert wird, wobei das jeweilige periodische Hilfssignal mit dem Energieversorgungsnetz phasensynchronisiert wird. Das Betriebsverfahren zeichnet sich dadurch aus, dass die periodischen Hilfssignale der beiden gekoppelten Wechselrichter zueinander einen vorgegebenen und von Null verschiedenen Phasenoffset aufweisen so dass zwischen den induktiv miteinander gekoppelten Wechselrichtern keine Ausgleichsströme fließen. Die Vorteile entsprechen denen des ersten Aspekts.

Im Folgenden wird die Erfindung anhand von sieben Figuren in Ausführungsbeispielen dargestellt. Die Figuren zeigen:
- Figur 1: ein schematisches Blockschaltbild einer Energieversorgungseinrichtung mit zwei Wechselrichtern,
- Figur 2: eine Wiedergabe von Ausgangsspannungen in Abhängigkeit der Zeit der beiden Wechselrichter aus dem Ausführungsbeispiel der Figur 1 im unsynchronisierten Fall,
- Figur 3: ein Teil eines Wechselrichters in einer schematischen Übersichtsdarstellung in einem schematischen Blockschaltbild,
- Figur 4: eine Wiedergabe von Ausgangsspannungen in Abhängigkeit der Zeit bei nicht induktiv gekoppelten Wechselrichtern im synchronisierten Fall,
- Figur 5: eine auch für induktiv gekoppelte Wechselrichter einsetzbare Synchronisationseinrichtung für einen Wechselrichter in einen schematischen Blockschaltbild, und
- Figur 6: ein vereinfachtes Ersatzschaltbild eines Dreiwickler-Transformators und
- Figur 7: ein Zeigerdiagramm zu dem in Figur 6 dargestellten Ersatzschaltbild.

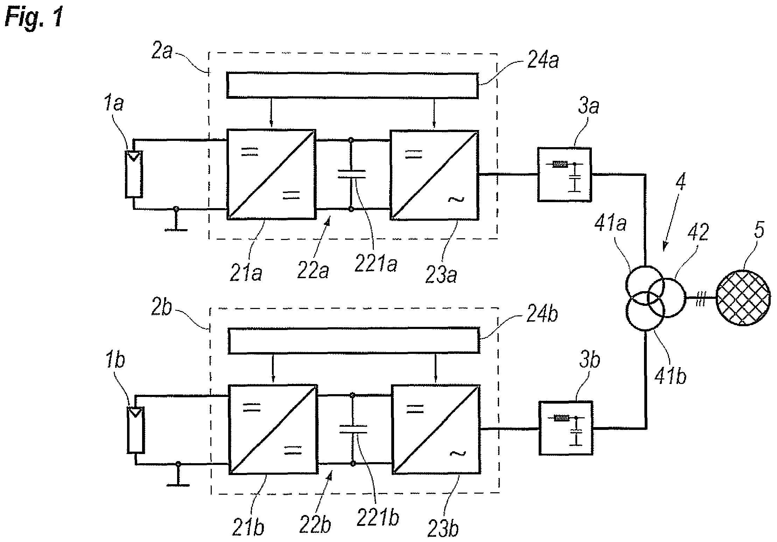

Figur 1 zeigt eine Photovoltaikanlage als Energieversorgungsanlage in einem schematischen Blockschaltbild. Die Photovoltaikanlage, abkürzend im Folgenden als PV-Anlage bezeichnet, weist zwei Photovoltaikgeneratoren (PV-Generatoren) 1a, 1b auf, die jeweils mit einem Wechselrichter 2a, 2b verbunden sind. Der Ausgang des Wechselrichters ist jeweils über einen Filter 3a, 3b mit einem Transformator 4 verbunden. Der Transformator 4 weist zu diesem Zweck zwei getrennte Primärwicklungen 41a, 41b auf. Eine gemeinsame Sekundärwindung 42 des Transformators 4 ist zur Einspeisung der von den PV-Generatoren 1a, 1b erzeugten und in den Wechselrichtern 2a, 2b umgewandelten elektrischen Leistung in ein Energieversorgungsnetz 5 mit diesem verbunden.

Symbolhaft sind in der Figur die PV-Generatoren 1a, 1b jeweils nur durch das Schaltsymbol einer einzelnen Photovoltaikzelle dargestellt. Es versteht sich, dass die PV-Generatoren 1a, 1b in einer Realisierung der dargestellten PV-Anlage jeweils aus einer Mehrzahl von Photovoltaikmodulen (PV-Modulen) aufgebaut sein können, die serien- und/oder parallel verschaltet sind. Aus Gründen der Übersichtlichkeit sind zudem weitere Elemente von PV-Anlagen, beispielsweise gleichstromseitige (DC - Direct Current) Schaltorgane oder wechselstromseitige (AC - Alternating Current) Schaltorgane, beispielsweise Anlagentrenner oder Sicherungsorgane, in der Figur nicht wiedergegeben.

Die Wechselrichter 2a, 2b umfassen im dargestellten Ausführungsbeispiel jeweils einen eingangsseitigen Gleichstrom-/Gleichstrom-Wandler 21a, 21b (DC/DC-Wandler), der jeweils über einen Zwischenkreis 22a, 22b mit einem Gleichstrom-/Wechselstrom-Wandler 23a, 23b (DC/AC-Wandler) verbunden ist. Es wird angemerkt, dass ein anmeldungsgemäßer Wechselrichter auch ohne einen eingangsseitigen DC/DC-Wandler aufgebaut sein kann. Im Zwischenkreis ist jeweils ein Kondensator 221a, 221b angeordnet, der der Glättung einer Zwischenkreisspannung Uz dient und eine gepulste Stromentnahme ohne Spannungseinbrüche der Zwischenkreisspannung Uz durch die DC/AC-Wandler 23a, 23b ermöglicht. Die Wechselrichter 2a, 2b weisen je eine Steuereinrichtung 24a, 24b zur Steuerung der DC/DC-Wandler 21a, 21b und der DC/AC-Wandler 23a, 23b auf. Die Steuerung der DC/DC-Wandler 21a, 21b kann dabei z.B. auch ein sogenanntes MPP (Maximum Power Point) - Nachführverfahren umfassen, das dem Betreiben der PV-Generatoren 1a, 1b an einem Arbeitspunkt maximaler Leistung dient.

Die PV-Anlage ist zur Einspeisung in das Energieversorgungsnetz 5 auf drei Phasen ausgelegt. Entsprechend weisen die Wechselrichter 2a, 2b einen dreiphasigen Ausgang auf und die Filter 3a und 3b und der Transformator 4 sind dreiphasig ausgestaltet. Die Anzahl von drei Phasen ist lediglich beispielhaft zu verstehen; ein anmeldungsgemäßer Wechselrichter und eine damit aufgebaute Wechselrichteranordnung können ebenso für einen Betrieb mit einer beliebigen Anzahl an Phasen, insbesondere einen einphasigen Betrieb geeignet sein.

Die Wechselrichter 2a, 2b weisen in ihren DC/AC-Wandlern 23a, 23b Ausgangsbrückenschaltungen mit Halbleiterleistungsschaltern auf, die in einem PWM-Verfahren angesteuert werden. Das Ausgangssignal der DC/AC-Wandler 23a, 23b ist daher ein getaktetes Gleichstromsignal, wobei die Taktfrequenz, also die Zahl der Schaltzyklen pro Sekunde, im Bereich von einem Kilohertz bis zu einigen 10 Kilohertz liegen kann. Die Filter 3a, 3b, die eine Kombination von induktiven und kapazitiven Elementen umfassen, dienen der Glättung des Ausgangssignals der Wechselrichter 2a, 2b zu einem möglichst sinusförmigen Spannungsverlauf. Sie werden aus diesem Grund häufig auch als Sinusfilter bezeichnet.

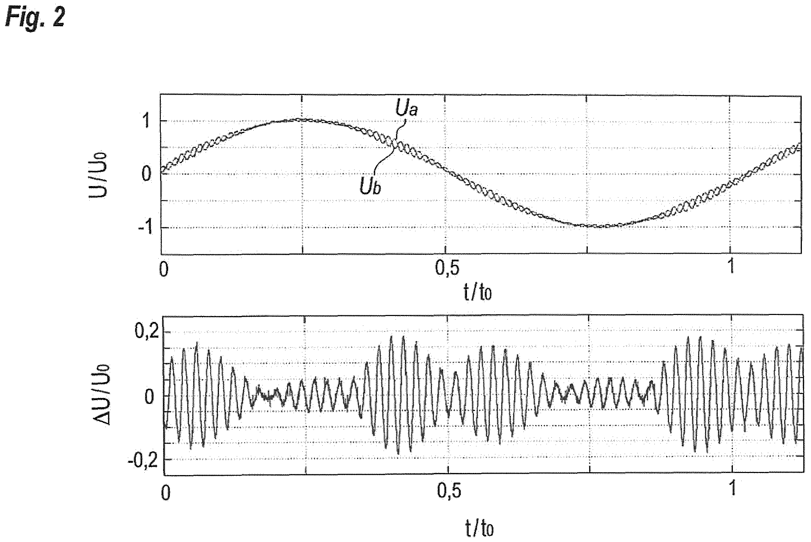

Figur 2 zeigt in ihrem oberen Teil die Spannungen Uₐ und U_{b} am Ausgang der Filter 3a, 3b normiert auf eine Amplitudenspannung U0 als Funktion der Zeit t. Dargestellt ist der Verlauf einer Periode einer Phase des Energieversorgungsnetzes 5 mit einer Periodenlänge t0. Die Figur 2 zeigt einen nicht synchronisierten Betrieb der Wechselrichter 2a, 2b. Die Verläufe der Spannungen Uₐ, U_{b} zeigen beide eine dem rein sinusförmigen Verlauf überlagerte Komponente mit höherer Frequenz. In ihrer Amplitude beträgt diese Komponente einige Prozent der Amplitudenspannung U₀. Diese Komponenten mit höherer Frequenz werden auch als Spannungsrippel bezeichnet.

Im unteren Teil der Figur 2 ist eine Differenzspannung ΔU = U_{b} - Uₐ auf gleicher Zeitachse wie im oberen Teil der Figur dargestellt. Bezüglich der Spannungsachse ist der untere Teil der Figur gegenüber dem oberen vergrößert dargestellt. Der um den Nullpunkt herum schwankende Verlauf der Spannungsdifferenz ΔU zeigt, dass die beiden Wechselrichter 2a, 2b bezüglich der Sinus-Grundschwingung einheitlich dem Spannungsverlauf des Energieversorgungsnetzes 5 folgen. Eine von Null verschiedene Differenzspannung ΔU ist jedoch bei den Spannungsrippeln zu beobachten. Beim Betrieb der PV-Anlage führt diese Differenzspannung ΔU aufgrund einer induktiven Kopplung der Ströme in den Primärwindungen 41a, 41b des Transformators 4 zu Ausgleichsströmen bei der Frequenz der Spannungsrippel, die zwischen den Kondensatoren in den Filtern 3a, 3b hin- und her fließen. Dieses ist insbesondere zu beobachten, wenn als Transformator 4 ein sogenannter Dreiwickler-Transformator eingesetzt wird, der eine geringere Impedanz zwischen den beiden Primärwicklungen aufweist als andere geeignete Transformatoren, beispielsweise die sogenannten Vierwickler-Transformatoren.

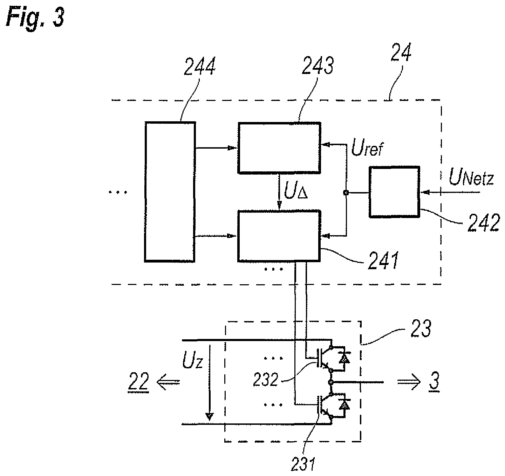

Figur 3 zeigt einen detaillierten Ausschnitt eines der Wechselrichter 2a, 2b aus der Figur 1 ebenfalls in einem Blockschaltbild. Die folgenden Ausführungen beziehen sich auf beide Wechselrichter 2a, 2b, die im dargestellten Ausführungsbeispiel gleich aufgebaut sind. Es wird daher auf eine Unterscheidung mit dem Index a, b bei den Bezugszeichen verzichtet.

Der DC/AC-Wandler 23 des Wechselrichters 2 weist eine Ausgangsbrückenanordnung auf, von der ein Brückenzweig symbolisch dargestellt ist. Bei dreiphasiger Ausführung des Wechselrichters 2 sind üblicherweise drei solcher Brückenzweige vorhanden, die in der Figur durch Auslassungspunkte angedeutet sind. Jeder Brückenzweig weist zwei Halbleiterleistungsschalter 231, 232 auf. Beispielhaft sind IGBT (Insulated Gate Bipolar Transistors) Schalter dargestellt, die jeweils mit einer antiparallel geschalteten Schutzdiode versehen sind. Es können jedoch auch andere geeignete Halbleiterschalter, beispielsweise MOS-FETs (Metalloxid Semiconductor Field-Effect Transistors), eingesetzt werden. Die Schalter 231, 232 werden von der Steuereinrichtung 24 angesteuert. Diese umfasst einen Pulsweitenmodulator 241, einen Referenzspannungsgenerator 242, eine Synchronisationseinheit 243 und eine Steuereinheit 244.

Der Pulsweitenmodulator 241 generiert die Ansteuersignale für die Schaltelemente 231, 232 derart, dass ein ihm vorgegebener Verlauf einer Referenzspannung U_{ref} nachgebildet wird. Die Referenzspannung U_{ref} wird von dem Referenzspannungsgenerator 242 aus einem diesem zugeführten Netzspannungsverlauf des Energieversorgungsnetzes 5 gebildet. Damit folgt der am Ausgang des Wechselrichters 2 ausgegebene Spannungsverlauf dem der Netzspannung; der Wechselrichter ist netzgekoppelt. Der Referenzspannungsgenerator 242 kann zur Bereitstellung der Referenzspannung U_{ref} die Spannung einer der Phasen des Energieversorgungsnetzes, im Folgenden Netzspannung U_{Netz} genannt, unmittelbar auf ein kleineres Spannungsniveau der Referenzspannung U_{ref} abbilden oder auch sich der Zwischenschaltung eines Referenzspannungssinusgenerators bedienen, der über eine Phasensynchronisationsschaltung (PLL - Phase Lock Loop) mit der vorgegebenen Netzspannung U_{Netz} synchronisiert wird.

Der Pulsweitenmodulator 241 ist im dargestellten Ausführungsbeispiel ein Dreieck-Sinus-Modulator. Bei dieser Modulationsart wird ein Dreiecksignal U_{Δ} als periodisches Hilfssignal zur Ermittlung der Schaltpunkte der Schalter 231, 232 eingesetzt. Die Frequenz des Dreiecksignals U_{Δ} beträgt ein Vielfaches der Frequenz f₀ der Netzspannung U_{Netz}. Im dargestellten Ausführungsbeispiel wird das als periodisches Hilfssignal benutzte Dreiecksignal U_{Δ} von der Synchronisationseinheit 243 erzeugt.

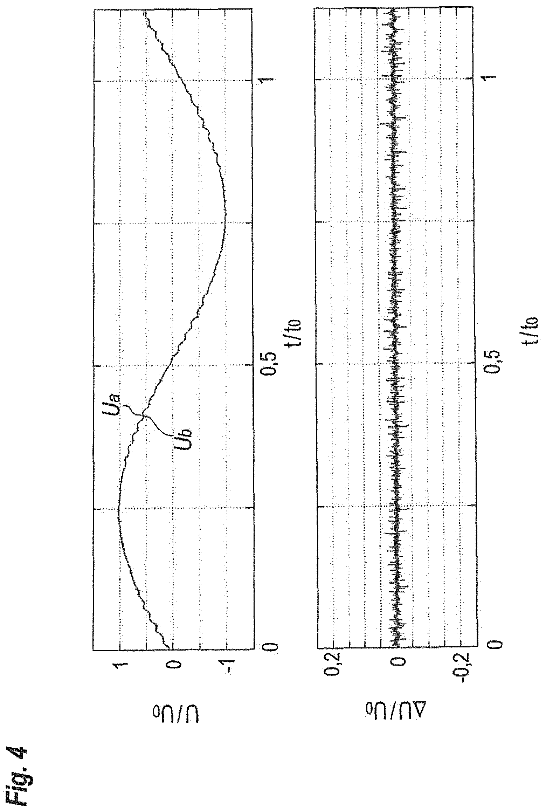

Figur 4 zeigt in gleicher Weise wie Figur 2 Ausgangsspannungen Uₐ und U_{b} zweier Wechselrichter, deren jeweiliges Hilfssignal auf eine gleiche Phasenlage im Bezug auf den Spannungsverlauf einer der Phasen eines Energieversorgungsnetzes eingestellt haben. Es ist im oberen Teil der Figur 4 zu erkennen, dass die Spannungsverläufe Uₐ und U_{b} auf der dargestellten Skala deckungsgleich verlaufen. Dieses bestätigt die Darstellung der Differenzspannung ΔU = U_{b} - Uₐ im unteren Teil der Figur, bei der nur minimale Abweichung von der Nulllinie zu erkennen sind. Nachteilige Ausgleichsströme, die bei einer direkten Kopplung der Ausgänge auftreten würden, sind bei Synchronisation des Dreiecksignals U_{Δ} auf die gleiche Phasenlage somit nicht mehr oder fast nicht mehr vorhanden.

Wenn die Wechselrichter jedoch nicht direkt, sondern wie bei dem Ausführungsbeispiel der Figur 1 induktiv gekoppelt sind, kann jedoch auch eine solche Synchronisation auf eine gemeinsame Phasenlage über eine der Phasen im Energieversorgungsnetz nicht verhindern, dass Ausgleichs-Wechselströme fließen.

Nach dem anmeldungsgemäßen Verfahren zum Betreiben einer Wechselrichteranordnung wird eine vorgegebene Phasenbeziehung zwischen dem periodischen Hilfssignal, hier dem Dreiecksignal U_{Δ}, und der Netzspannung U_{Netz}, repräsentiert durch die Referenzspannung U_{ref}, für die Wechselrichter der Wechselrichteranordnung derart eingestellt, dass die Hilfssignale zweier gekoppelter Wechselrichter zueinander einen vorgegebenen und von Null verschiedenen Phasenoffset ΔΦ₀ aufweisen können. Im vorliegend beschriebenen Ausführungsbeispiel wird dieses durch die Synchronisationseinheit 243 vorgenommen.

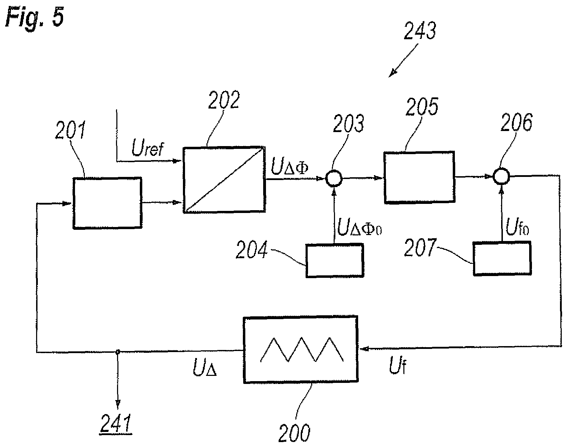

Figur 5 zeigt den Aufbau der Synchronisationseinheit 243 aus Figur 4 detaillierter in einem Blockschaltbild. Es wird vorab darauf hingewiesen, dass in Figur 5 eine Synchronisationseinheit mit einem analogen Regelkreis für die Phasenlage des Hilfssignals für die PWM dargestellt ist. Es versteht sich, dass die Synchronisationseinheit ebenfalls über eine digital arbeitende Regelung verfügen kann.

Die Synchronisationseinheit weist einen Dreiecksspannungsgenerator 200 auf, der als spannungsgesteuerter Frequenzgenerator ausgeführt ist, dessen Frequenz f über ein Eingangsspannungssignal U_{f} gesteuert wird. Das vom Dreiecksspannungsgenerator 200 an einem Ausgang abgegebene Spannungssignal wird als Dreiecksignal U_{Δ} dem Pulsweitenmodulator 241 bereitgestellt.

Innerhalb der Synchronisationseinheit wird das Dreiecksignal U_{Δ} einem Frequenzwandler 201 zugeführt. Die Frequenz f des Dreiecksignals U_{Δ} beträgt üblicherweise ein ganzzahliges Vielfaches der Netzfrequenz f₀ des Energieversorgungsnetzes 5. Das Frequenzverhältnis f/f₀ zwischen den beiden Frequenzen liegt bevorzugt im Bereich von etwa 10 bis 100. Zur Durchführung eines Vergleichs der Phasenlagen des Dreiecksignals U_{Δ} und des niederfrequenteren Netzspannungsverlaufs führt der Frequenzwandler 201 eine Frequenzteilung des Dreiecksignals U_{Δ} um den genannten Faktor, sowie eine Wellenformumwandlung in ein sinusförmiges Signal durch. Eine Möglichkeit der Umwandlung besteht darin, einen umlaufenden Zähler einzurichten, dessen Zählerinhalt pro durchlaufener Periode des Dreiecksignals U_{Δ} um den Wert 1 inkrementiert wird. Wenn der Zähler einen Zählerstand erreicht, der dem Frequenzverhältnis f/f₀ entspricht, wird der Zähler zurück auf einen Anfangswert von 1 gesetzt. Der Zähler durchläuft so zyklisch f/f₀ verschiedene Werte, wobei jeder zyklische Durchlauf einer Periodendauer des Sinussignals der Netzspannung U_{Netz} entspricht. In dem Frequenzwandler 201 ist eine Umwandlungstabelle abgelegt, in der für jeden Zählerstand ein korrespondierender Wert einer Sinusspannung mit der Periodendauer der Netzfrequenz f₀ abgelegt ist. Am Ausgang des Frequenzwandlers 201 wird ein mittels einem Digital-/Analogwandlers erzeugtes Spannungssignal gemäß den Werten dieser Tabelle ausgegeben. Der Frequenzwandler 201 stellt somit an ihrem Ausgang ein sinusförmiges Spannungssignal bereit, das phasenstarr an das Dreieckssignal U_{Δ} des Dreieckgenerators 200 gekoppelt ist und in seiner Frequenz der Netzspannung U_{Netz} entspricht. Dieses Signal wird ebenso einem Phasenvergleicher 202 zugeführt wie das von dem Referenzgenerator 242 bereitgestellte, zur Netzspannung phasenstarre Referenzsignal U_{ref}. Am Ausgang des Phasenvergleichers 202 wird ein Signal U_{ΔΦ} ausgegeben, das proportional zum Phasenunterschied der beiden Eingangssignale ist. In einem Addierer 203 wird diesem Signal noch eine von einem Offseteinsteller 204 erzeugte Spannung aufsummiert, die einem einzustellenden Phasenoffset ΔΦ₀ entspricht. Das Summensignal wird als Steuergröße einem Regelbaustein 205 zugeführt, der beispielsweise als Proportional-/Integralregler (PI-Regler) ausgeführt sein kann. Der Ausgang des Regelbausteins 205 wird in einem weiteren Addierer 206 zu einer Grundfrequenzspannung U_{f0}, die ein Grundfrequenzeinsteller 207 ausgibt, addiert, um die Steuerspannung U_{f} zu erzeugen, die, wie eingangs beschrieben, die Frequenz f des Dreieckgenerators 200 steuert.

Die Synchronisationseinheit 243 umfasst so einen Phasenregelkreis (PLL) durch den die Frequenz f des Dreieckgenerators 200 über den Regelbaustein 205 ständig so nachgeregelt wird, dass eine feste Phasenbeziehung zwischen dem Dreiecksignal U_{Δ} und der Referenzspannung U_{ref} herrscht. Diese Phasenbeziehung kann dabei über den Offseteinsteller 204 eingestellt bzw. auch von einer Steuereinrichtung vorgegeben werden. Das Frequenzverhältnis f/f₀ zwischen dem Dreiecksignal U_{Δ} und der Netzspannung U_{Netz} wird über den Frequenzteiler 201 und die in diesem hinterlegte Umwandlungstabelle bestimmt. Dabei sollte die Vorgabe der Grundfrequenzspannung U_{f0} durch den Grundfrequenzeinsteller entsprechend angepasst werden, so dass bereits beim Einschalten des Regelkreises die Grundfrequenz bereits möglichst nah an der Betriebsfrequenz des Dreieckgenerators 200 liegt.

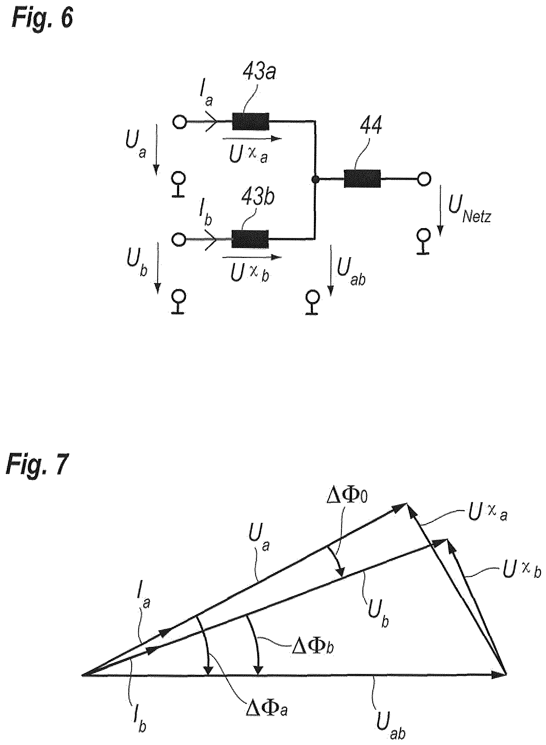

Nachfolgend wird anhand der Figuren 6 und 7 ein Verfahren zur Bestimmung eines Phasenoffset ΔΦ₀ beschrieben, der verhindert, dass bei einer induktiven Kopplung zweier Wechselrichter Ausgleichsströme aufgrund von Spannungsrippeln auf der Ausgangsspannung der Wechselrichter fließen.

Figur 6 gibt dazu ein vereinfachtes Ersatzschaltbild des Dreiwickler-Transformators 4 aus dem Ausführungsbeispiel der Figur 1 an. In diesem vereinfachten Ersatzschaltbild sind sowohl ohmsche Widerstände der Primärwicklungen 41a, 41b und der Sekundärwicklung 42, als auch die Hauptinduktivität des Transformators 4 unberücksichtigt.

Angegeben sind die für die induktive Kopplung relevanten Streuinduktivitäten 43a, 43b der Primärwicklungen 41a bzw. 41b sowie eine Streuinduktivität 44 der Sekundärwicklung 42. An den mit den Streuinduktivitäten 43a, 43b verbundenen Eingängen des Transformators 4 liegen die Spannungen Uₐ bzw. U_{b} an. An der Streuinduktivität 44 liegt entsprechend die Netzspannung U_{Netz} an. Weiterhin sind in der Figur 6 die an den Eingängen fließendenden Ströme Iₐ und I_{b} eingetragen, sowie eine Spannung U_{ab}, mit der der Knotenpunkt zwischen den Streuinduktivitäten 43a, 43b und 44 beaufschlagt ist.

Beim Betrieb des dargestellten Transformators 4 führen die Ströme Iₐ, I_{b} in Verbindung mit den Blindwiderständen der Streuimpedanz 43a, 43b zu einem Spannungsabfall U^{χ}ₐ bzw. U^{χ}_{b} über den Streuimpedanzen 43a, 43b.

Ausgleichsströme zwischen den Wechselrichtern werden dann verhindert, wenn in jedem der Teilzweige vom Eingang des Transformators 4 bis zum genannten Knotenpunkt sich die entsprechende Eingangsspannungen Uₐ bzw. U_{b} und die entsprechende Spannungsabfälle U^{χ}ₐ bzw. U^{χ}_{b} zur gleichen Knotenspannung U_{ab} addieren, wenn also gilt Uₐ - U^{χ}ₐ = U_{b} - U^{χ}_{b}, wobei zu berücksichtigen ist, dass die Eingangsspannungen und die über den Streuimpedanzen 43a, 43b abfallenden Spannungen in einer komplexen Darstellung senkrecht aufeinander stehen.

In Figur 7 ist diese Bedingung in Form eines Zeigerdiagramms wiedergegeben. Die Spannungsabfälle U^{χ}ₐ bzw. U^{χ}_{b} führen zu Phasenunterschieden ΔΦₐ und ΔΦ_{b} der Eingangsspannung Uₐ und U_{b} gegenüber der Knotenspannung U_{ab}. Die Phasenverschiebungen ΔΦₐ, ΔΦ_{b} sind üblicherweise unterschiedlich, da auch der Betrag der Spannungsabfälle U^{χ}ₐ und U^{χ}_{b} unterschiedlich ist. Dieser ergibt sich als Produkt aus dem Strom Iₐ bzw. I_{b} sowie dem Blindwiderstand der jeweiligen Streuinduktivität 43a bzw. 43b. Der Blindwiderstand ist wiederum für die vorgegebene Netzfrequenz proportional zur Größe des Induktivitätswerts der Streuinduktivität 43a, 43b. Zusammenfassend bedeutet dieses, dass zum einen die von einem Wechselrichter eingespeiste Leistung, denn diese bestimmt die Größe Iₐ, I_{b}, und zum anderen die Eigenschaften des Transformators 4 für die Phasenunterschiede ΔΦₐ und ΔΦ_{b} verantwortlich sind. Bezüglich des Transformators 4 sind insbesondere die Unterschiede in den Eigenschaften der einzelnen den Wechselrichtern zugeordneten Wicklungen 41a, 41b relevant. Eine Einspeisung ohne fließende Ausgleichsströme zwischen den Wechselrichtern wird dann erreicht, wenn zwischen den Ausgangsspannungen Uₐ und U_{b} ein Phasenoffset von ΔΦ₀ = ΔΦₐ - ΔΦ_{b} eingestellt wird.

Dabei kann vorgesehen sein, dass neben den Eigenschaften eines Transformators auch die elektrischen Eigenschaften einer Verbindungsstrecke zwischen dem Wechselrichter und dem Transformator berücksichtigt werden, um ihre Einflüsse auf Phasenunterschiede zu kompensieren. In diesem Sinne ggf. relevante Eigenschaften der Verbindungsstrecke sind beispielsweise die Impedanzen von Verbindungsleitungen und/oder von zwischengeschalteten Filtern.

Große Photovoltaik-Kraftwerke werden häufig aus mehreren PV-Anlagen gemäß Figur 1 aufgebaut. Wie zuvor beschrieben, werden die Wechselrichter 2 jeder PV-Anlage synchronisiert, um Ausgleichsströme zu vermeiden. Vorteilhafterweise werden beim Zusammenschalten mehrerer PV-Anlagen auf einen Netzanschlusspunkt des Energieversorgungsnetzes 5 jedoch die PV-Anlagen jeweils paarweise so synchronisiert, dass ihre jeweiligen Spannungsrippel möglichst gegenphasig (Phasenverschiebung von 180°) verlaufen und sie sich so aufheben. Bei der Synchronisationseinheit 243 gemäß der Figur 5 kann auch dieses über den Offseteinsteller 204 erfolgen. Die Wechselrichter einer ersten PV-Anlage werden im Bezug auf ihre Dreieckspannung U_{Δ} gleichphasig mit einem bestimmten Phasenoffset ΔΦ₀ betrieben und die Wechselrichter einer zweiten PV-Anlage werden im Bezug auf ihre Dreieckspannung U_{Δ} wiederum zueinander mit einem bestimmten Phasenoffset ΔΦ'₀ betrieben, wobei jedoch zwischen den Wechselrichtern der ersten und der zweiten PV-Anlage ein Phasenoffset von etwa 180° besteht.

In einer alternativen Ausgestaltung werden bei einem Photovoltaik-Kraftwerk mit mehreren PV-Anlagen wie zuvor beschrieben die Wechselrichter 2 jeder PV-Anlage so synchronisiert, dass ihre Ausgänge gleich verlaufende Spannungsrippel zeigen. Die einzelnen PV-Anlagen werden jedoch mit vorgegebenen, von Null verschiedenen Phasenoffsets ΔΦ₀ betrieben, die bevorzugt unterschiedlich sind und möglichst gleichmäßig über den gesamten Phasenraum (0 bis 2π bzw. 0-180°) verteilt sind. Diese Ausgestaltung eignet sich insbesondere für Photovoltaik-Kraftwerke, die eine ungerade Anzahl von PV-Anlagen umfassen.

### Bezugszeichenliste

- 1: Photovoltaikgenerator (PV-Generator)
- 2: Wechselrichter
- 21: DC/DC-Wandler
- 22: Zwischenkreis
- 221: Kondensator
- 23: DC/AC-Wandler
- 231, 232: Halbleiterleistungsschalter
- 24: Steuereinrichtung
- 241: Phasenmodulator
- 242: Referenzspannungsgenerator
- 243: Synchronisationseinheit
- 244: Steuereinheit
- 3: Filter
- 4: Transformator
- 41: Primärwicklung
- 42: Sekundärwindung
- 5: Energieversorgungsnetz
- 200: Dreieckgenerator
- 201: Frequenzteiler
- 202: Phasenvergleicher
- 203: Addierer
- 204: Offseteinsteller
- 205: PI-Regler
- 206: Addierer
- 207: Grundfrequenzeinsteller

## Patentansprüche

1. Wechselrichteranordnung mit mindestens zwei netzgekoppelten Wechselrichtern (2) zur Einspeisung von Strom über einen Transformator (4) in ein Energieversorgungsnetz (5), die wechselstromseitig induktiv miteinander gekoppelt sind, **dadurch gekennzeichnet, dass** die Wechselrichter (2) jeweils aufweisen
- eine Ausgangsbrückenanordnung, die über einen Pulsweitenmodulator (241) angesteuert wird, wobei zur Bestimmung von Schaltzeitpunkten der Ausgangsbrückenanordnung ein periodisches Hilfssignal eingesetzt wird, und
- eine Synchronisationseinheit (241) zur Phasensynchronisation des Hilfssignals mit dem Energieversorgungsnetz (5), wobei die Synchronisationseinheit (241) zur Einstellung eines vorgegebenen Phasenoffsets (ΔΦₐ, ΔΦ_{b}) des periodischen Hilfssignals zu einer Phase des Energieversorgungsnetzes (5) eingerichtet ist,
so, dass zwischen den induktiv miteinander gekoppelten Wechselrichtern keine Ausgleichströme fließen,
- wobei die Synchronisationseinheit (241) eine PLL-Schaltung umfasst.

2. Wechselrichteranordnung nach Anspruch 1, **dadurch gekennzeichnet, dass** bei den Wechselrichtern jeweils der Pulsweitenmodulator (241) ein Sinus-Dreieck-Modulator und das periodische Hilfssignal ein Dreiecksignal (U_{Δ}) ist.

3. Wechselrichteranordnung nach Anspruch 1, **dadurch gekennzeichnet, dass** bei den Wechselrichtern jeweils die PLL-Schaltung einen Frequenzwandler (201) mit einer Umwandlungstabelle und einen DA-Wandler umfasst, zur Umwandlung des periodischen Hilfssignals in eine phasenstarre Sinusspannung geringerer Frequenz.

4. Wechselrichteranordnung nach einem der Ansprüche 1 bis 3, bei der die Wechselrichter (2) wechselstromseitig über einen Dreiwickler-Transformator (4) miteinander gekoppelt sind.

5. Wechselrichteranordnung nach Anspruch 4, bei der der Dreiwickler-Transformator (4) zwei Primärwicklungen mit unterschiedlichen Impedanzen aufweist.

6. Betriebsverfahren für eine Wechselrichteranordnung zur Einspeisung von Leistung in ein Energieversorgungsnetz (5) mit mindestens zwei netzgekoppelten Wechselrichtern (2), die wechselstromseitig über einen Transformator (4) miteinander gekoppelt sind, und die jeweils eine Ausgangsbrückenanordnung aufweisen, die pulsweitenmoduliert unter Verwendung eines periodischen Hilfssignals angesteuert wird, wobei das jeweilige periodische Hilfssignal innerhalb des jeweiligen Wechselrichters (2) mit dem Energieversorgungsnetz (5) mittels einer PLL-Schaltung phasensynchronisiert wird, **dadurch gekennzeichnet, dass** die periodischen Hilfssignale der beiden gekoppelten Wechselrichter (2) zueinander einen vorgegebenen, von Null verschiedenen Phasenoffset (ΔΦ₀) aufweisen, so, dass keine Ausgleichströme zwischen den induktiv über den Transformator miteinander gekoppelten Wechselrichtern (2) fließen.

7. Betriebsverfahren nach Anspruch 6, bei dem der Phasenoffset (ΔΦ₀) abhängig von einer von dem Wechselrichter (2) in das Energieversorgungsnetz (5) eingespeisten Leistung ist.

8. Betriebsverfahren nach Anspruch 6 oder 7, bei dem der Phasenoffset (ΔΦ₀) abhängig von der Größe einer Induktivität und/oder eines Widerstands einer mit dem Wechselrichter verbundenen Wicklung (41) des Transformators (4) ist.

9. Betriebsverfahren nach einem der Ansprüche 6 bis 8, bei dem der Phasenoffset (ΔΦ₀) abhängig von der Größe einer Induktivität und/oder eines Widerstands einer Verbindungsstrecke zwischen dem Wechselrichter und dem Transformator (4) ist.

10. Betriebsverfahren nach einem der Ansprüche 6 bis 9, bei dem mindestens vier netzgekoppelte Wechselrichter (2) vorgesehen sind, die paarweise wechselstromseitig miteinander gekoppelt sind, wobei die vorgegebenen, von Null verschiedenen Phasenoffsets (ΔΦ₀) der periodischen Hilfssignale für die jeweils paarweise wechselstromseitig miteinander gekoppelten und die nicht miteinander gekoppelten Wechselrichter (2) unterschiedlich sind.

11. Betriebsverfahren nach Anspruch 10, bei dem die periodischen Hilfssignale von jeweils nicht miteinander gekoppelten Wechselrichtern (2) gegenphasig sind.

12. Betriebsverfahren nach Anspruch 10, bei dem die periodischen Hilfssignale aller nicht miteinander gekoppelten Wechselrichter (2) unterschiedliche Phasenoffsets (ΔΦ₀) aufweisen.

## Claims

1. An inverter arrangement comprising at least two grid-connected inverters (2) for feeding current via a transformer (4) into an electric power grid (5), which are coupled inductively to one another on the AC side, **characterized in that** the inverters (2) each comprise
- an output bridge arrangement that is actuated via a pulse width modulator (241), wherein a periodic auxiliary signal is used to determine switching times of the output bridge arrangement,
- a synchronization unit (241) for phase synchronization of the auxiliary signal with the electric power grid (5), wherein the synchronization unit (241) is designed to set a predetermined phase offset (ΔΦ₀) of the periodic auxiliary signal with respect to a phase of the electric power grid (5), such that no compensation currents flow between the inductively coupled inverters (2),
- wherein the synchronization unit (241) comprises a PLL circuit.

2. The inverter arrangement according to claim 1, **characterized in that** in the inverters, the pulse width modulator (241) is a sine-triangle modulator, and the periodic auxiliary signal is a triangular signal (U_{Δ}).

3. The inverter arrangement according to claim 1, **characterized in that** in the inverters, the PLL circuit comprises a frequency converter (201) with a conversion table and a DA converter for converting the periodic auxiliary voltage into a phase-locked sinusoidal voltage with a lower frequency.

4. The inverter arrangement according to one of the claims 1 to 3, in which the inverters (2) are coupled to one another on the AC side via a three-winding transformer (4).

5. The inverter arrangement according to claim 4, in which the three-winding transformer (4) comprises two primary windings with different impedances.

6. An operating method for an inverter arrangement for feeding power into an electric power grid (5) with at least two grid-connected inverters (2) that are coupled to one another on the AC side via at least one transformer (4), and which each comprise an output bridge arrangement that is actuated in a pulse-width-modulated fashion using a periodic auxiliary signal, wherein the respective periodic auxiliary signal is phase-synchronized with the electric power grid (5) within the respective inverter (2) by means of a PLL circuit, **characterized in that** the periodic auxiliary signals of the two coupled inverters (2) have a predetermined phase offset (ΔΦ₀) other than zero with respect to one another, such that no compensation currents flow between the inverters (2) being inductively coupled via the transformer.

7. The operating method according to claim 6, in which the phase offset (ΔΦ₀) is dependent on a power fed by the inverter (2) into the electric power grid (5) .

8. The operating method according to claim 8 or 9, in which the phase offset (ΔΦ₀) is dependent on the magnitude of an inductance and/or a resistance of a winding (41) of the transformer (4) which is connected to the inverter.

9. The operating method according to one of claims 6 to 8, in which the phase offset (ΔΦ₀) is dependent on the magnitude of an inductance and/or a resistance of a connecting path between the inverter and the transformer (4).

10. The operating method according to one of claims 6 to 9, in which at least four grid-connected inverters (2) are provided that are coupled to one another in pairs of two on the AC side, wherein the predetermined non-zero phase offsets (ΔΦ₀) of the periodic auxiliary signals are different for the inverters (2) that are each coupled to one another in pairs on the AC side and the inverters (2) that are not coupled to one another.

11. The operating method according to claim 10, in which the periodic auxiliary signals of inverters (2) that are not coupled to one another are in phase opposition.

12. The operating method as claimed in claim 10, in which the periodic auxiliary signals of all of the inverters (2) that are not coupled to one another have different phase offsets (ΔΦ₀).

## Revendications

1. Dispositif de l'onduleur comprenant au moins deux onduleurs (2) couplés au réseau pour l'alimentation en courant d'un réseau électrique (5) par l'intermédiaire d'un transformateur (4), qui sont couplés l'un à l'autre de manière inductive du côté du courant alternatif, **caractérisé en ce que** les onduleurs (2) comprennent chacun
- un montage en pont de sortie qui est actionné par un modulateur de largeur d'impulsion (241), dans lequel un signal auxiliaire périodique est utilisé pour déterminer les temps de commutation du montage en pont de sortie,
- une unité de synchronisation (241) pour la synchronisation de phase du signal auxiliaire avec le réseau électrique (5), dans laquelle l'unité de synchronisation (241) est conçue pour régler un décalage de phase prédéterminé (ΔΦ₀)) du signal auxiliaire périodique par rapport à une phase du réseau électrique (5), de sorte qu'aucun courant de compensation ne circule entre les onduleurs à couplage inductif (2),
- dans lequel l'unité de synchronisation (241) comprend un circuit en boucle à verrouillage de phase.

2. Le dispositif de l'onduleur selon la revendication 1, **caractérisé en ce que** dans les onduleurs, le modulateur de largeur d'impulsion (241) est un modulateur sinus-triangle, et le signal auxiliaire périodique est un signal triangulaire (U_{Δ}).

3. Le dispositif de l'onduleur selon la revendication 1, **caractérisé en ce que** dans les onduleurs, le circuit en boucle à verrouillage de phase comprend un convertisseur de fréquence (201) avec une table de conversion et un convertisseur numérique-analogique pour convertir la tension auxiliaire périodique en une tension sinusoïdale à verrouillage de phase avec une fréquence inférieure.

4. Le dispositif de l'onduleur selon l'une des revendications 1 à 3, dans laquelle les onduleurs (2) sont couplés entre eux du côté AC par un transformateur à trois enroulements (4).

5. Le dispositif de l'onduleur selon la revendication 4, dans laquelle le transformateur à trois enroulements (4) comprend deux enroulements primaires d'impédances différentes.

6. Procédé de fonctionnement d'un dispositif de l'onduleur pour l'alimentation en courant d'un réseau électrique (5) avec au moins deux onduleurs (2) connectés au réseau, qui sont couplés l'un à l'autre du côté du courant alternatif par au moins un transformateur (4) et qui comprennent chacun un dispositif de pont de sortie qui est commandé par un signal auxiliaire périodique en modulation de largeur d'impulsion, dans lequel le signal auxiliaire périodique respectif est synchronisé en phase avec le réseau électrique (5) à l'intérieur de l'onduleur (2) respectif au moyen d'un circuit en boucle à verrouillage de phase, **caractérisé en ce que** les signaux auxiliaires périodiques des deux onduleurs (2) couplés ont un déphasage (ΔΦ₀) prédéterminé différent de zéro l'un par rapport à l'autre, de sorte qu'aucun courant de compensation ne circule entre les onduleurs (2) couplés par induction par l'intermédiaire du transformateur.

7. Mode de fonctionnement selon la revendication 6, dans lequel le déphasage (ΔΦ₀) dépend d'une puissance injectée par l'onduleur (2) dans le réseau électrique (5) .

8. Mode de fonctionnement selon la revendication 8 ou 9, dans lequel le déphasage (ΔΦ₀) dépend de la grandeur d'une inductance et/ou d'une résistance d'un enroulement (41) du transformateur (4) qui est connecté à l'onduleur.

9. Procédé de fonctionnement selon l'une des revendications 6 à 8, dans lequel le déphasage (ΔΦ₀) dépend de la grandeur d'une inductance et/ou d'une résistance d'un chemin de connexion entre l'onduleur et le transformateur (4).

10. Procédé de fonctionnement selon l'une des revendications 6 à 9, dans lequel il est prévu au moins quatre onduleurs (2) raccordés au réseau, qui sont couplés entre eux par paires de deux du côté AC, les déphasages (ΔΦ₀) non nuls prédéterminés des signaux auxiliaires périodiques étant différents pour les onduleurs (2) qui sont couplés entre eux par paires du côté AC et pour les onduleurs (2) qui ne sont pas couplés entre eux.

11. Mode de fonctionnement selon la revendication 10, dans lequel les signaux auxiliaires périodiques des onduleurs (2) qui ne sont pas couplés entre eux sont en opposition de phase.

12. Mode de fonctionnement selon la revendication 10, dans lequel les signaux auxiliaires périodiques de tous les onduleurs (2) qui ne sont pas couplés entre eux ont des déphasages différents (ΔΦ₀).
